# EUROPEAN PATENT APPLICATION

(11) **EP 4 721 902 A1**
(43) Date of publication of application: **08.04.2026**
(21) Application number: 25815628.0
(22) Date of filing: 16.05.2025
(51) Int. Cl.: B23H 5/08, C25F 3/26

(54) **METHOD FOR REDUCING SURFACE OF SURFACE REDUCTION MATERIAL MADE OF PURE TITANIUM OR TITANIUM ALLOY OR NICKEL-BASED ALLOY**

(30) Priority: 28.05.2024 JP 2024086426
(71) Applicant: Tokyo Stainless Grinding Co., Ltd., Tokyo 131-0045 (JP)
(72) Inventor: AOYAGI, Taiji, Yachiyo-shi, Chiba 276-0046 (JP); YOSHIKAWA, Mitsuhisa, Yachiyo-shi, Chiba 276-0046 (JP); ENDO, Yoshio, Yachiyo-shi, Chiba 276-0046 (JP); KUSAKABE, Mitsuru, Tokyo 131-0045 (JP); KUSAKABE, Shigeru, Tokyo 131-0045 (JP)
(74) Representative: Vossius & Partner Patentanwälte Rechtsanwälte mbB
(86) International application number: PCT/JP2025/017805
(87) International publication number: WO 2025/249206

(57) **Abstract**

One embodiment of the present invention provides a method of surface-reducing a workpiece to be surface-reduced made of pure titanium or a titanium alloy by using a device including a rotation surface-reducing head having an electrode and a grindstone, and the method includes a step of surface-reducing the workpiece to be surface-reduced by using the rotation surface-reducing head under conditions where an electrolytic voltage between the electrode and the workpiece to be surface-reduced is 1 to 25 V, a current density between the electrode and the workpiece to be surface-reduced is 0.1 to 2.5 A/cm², and a flow velocity of an electrolyte solution between the electrode and the workpiece to be surface-reduced is 1.0 to 3.0 m/sec. Further, one embodiment of the present invention provides a method of surface-reducing a workpiece to be surface-reduced made of a nickel-based alloy by using a device including a rotation surface-reducing head having an electrode and a grindstone, and the method includes a step of surface-reducing the workpiece to be surface-reduced by using the rotation surface-reducing head under conditions where an electrolytic voltage between the electrode and the workpiece to be surface-reduced is 25 to 40 V, a current density between the electrode and the workpiece to be surface-reduced is 1.0 to 15.0 A/cm², and a flow velocity of an electrolyte solution between the electrode and the workpiece to be surface-reduced is 1.0 to 4.0 m/sec.

## Description

### Technical Field

The present invention relates to a method of surface-reducing a workpiece to be surface-reduced made of pure titanium or a titanium alloy or of a nickel-based alloy.

### Background Art

In general, steel materials such as H-shaped steel, columns, square pipes, flat bars, hot-rolled plates, cold-rolled plates, or the like have extremely coarse surfaces (acid-pickled surface), micro surface defect layers, weld deformation portions, or the like on their surfaces. To meet requirements for building materials or the like, surfaces of steel materials are ground, and gloss finish, hairline finish, or the like are applied thereto.

Patent Literature 1 discloses an electrolytic surface-reducing device and an electrolytic surface-reducing method for grinding an object to be ground such as a flat bar, a square pipe, or the like made of stainless steel. Specifically, the disclosure is directed to an electrolytic surface-reducing method that effectively grinds a flat bar and a square pipe made of stainless steel under conditions of a current density of 20 to 21 A/cm² and a flow velocity of an electrolyte solution of 6 m/sec by using an electrolytic surface-reducing device including a grinding head, and the grinding head has an electrode made of an aluminum alloy or stainless steel and an elastic grindstone.

### Citation List

### Patent Literature

Patent Literature 1: Japanese Patent No. 4878159

### Summary of Invention

### Technical Problem

The conventional electrolytic surface-reducing method disclosed in Patent Literature 1 may effectively grind an object to be ground made of stainless steel but, when grinding an object to be ground made of materials other than stainless steel, has a problem of inability to effectively grind the object under the grinding conditions disclosed in Patent Literature 1.

Accordingly, the present invention intends to provide a method that can effectively surface-reduce a workpiece to be surface-reduced made of pure titanium or a titanium alloy or of a nickel-based alloy, which is a material other than stainless steel. Note that, in the present specification, "surface-reducing" means machining of using grinding process and electrolysis to reduce the plate thickness of a workpiece to be surface-reduced.

### Solution to Problem

The present invention includes aspects described below.

### [Aspect 1]

A method of surface-reducing a workpiece to be surface-reduced made of pure titanium or a titanium alloy by using a device comprising a rotation surface-reducing head having an electrode and a grindstone, the method comprising a step of:
surface-reducing the workpiece to be surface-reduced by using the rotation surface-reducing head under conditions where an electrolytic voltage between the electrode and the workpiece to be surface-reduced is 1 to 25 V, a current density between the electrode and the workpiece to be surface-reduced is 0.1 to 2.5 A/cm², and a flow velocity of an electrolyte solution between the electrode and the workpiece to be surface-reduced is 1.0 to 3.0 m/sec.

### [Aspect 2]

The method according to aspect 1,
wherein the workpiece to be surface-reduced is made of pure titanium, and
wherein the electrolytic voltage is 8 to 20 V, the current density is 0.3 to 1.7 A/cm², and the flow velocity of the electrolyte solution is 2.2 to 2.8 m/sec.

### [Aspect 3]

The method according to aspect 2, wherein the pure titanium contains 0.50 percent by weight (wt.%) or less of an Fe component and 0.40 wt.% or less of an O component in addition to the Ti component.

### [Aspect 4]

The method according to aspect 1,
wherein the workpiece to be surface-reduced is made of a titanium alloy, and
wherein the electrolytic voltage is 5 to 15 V, the current density is 0.9 to 1.3 A/cm², and the flow velocity of the electrolyte solution is 1.8 to 2.2 m/sec.

### [Aspect 5]

The method according to aspect 4, wherein the titanium alloy contains 3.5 to 4.5 wt.% of an Al component, 15.0 to 17.0 wt.% of a V component, and 5.0 to 7.0 wt.% of a Cr component in addition to the Ti component.

### [Aspect 6]

A method of surface-reducing a workpiece to be surface-reduced made of a nickel-based alloy by using a device comprising a rotation surface-reducing head having an electrode and a grindstone, the method comprising a step of:
surface-reducing the workpiece to be surface-reduced by using the rotation surface-reducing head under conditions where an electrolytic voltage between the electrode and the workpiece to be surface-reduced is 25 to 40 V, a current density between the electrode and the workpiece to be surface-reduced is 1.0 to 15.0 A/cm², and a flow velocity of an electrolyte solution between the electrode and the workpiece to be surface-reduced is 1.0 to 4.0 m/sec.

### [Aspect 7]

The method according to aspect 6, wherein the electrolytic voltage is 28 to 35 V, the current density is 4.0 to 11.0 A/cm², and the flow velocity of the electrolyte solution is 2.2 to 3.0 m/sec.

### [Aspect 8]

The method according to aspect 6 or 7, wherein the nickel-based alloy contains 14.0 to 24.0 wt.% of a Cr component, 10.0 wt.% or less of a Mo component, and 34 wt.% or less of a Cu component in addition to the Ni component.

### [Aspect 9]

The method according to any one of aspects 1 to 8, wherein the step is performed under further conditions where a pressure applied to the rotation surface-reducing head is 1.0 to 3.0 kN and a rotational rate of the rotation surface-reducing head is 300 to 500 rpm.

### [Aspect 10]

The method according to any one of aspects 1 to 9, wherein the electrode is made of pure copper.

### [Aspect 11]

A manufacturing method of pure titanium or a titanium alloy, the manufacturing method comprising a step of surface-reducing a workpiece to be surface-reduced made of pure titanium or a titanium alloy by using a device comprising a rotation surface-reducing head having an electrode and a grindstone,
wherein the step is a step of surface-reducing the workpiece to be surface-reduced by using the rotation surface-reducing head under conditions where an electrolytic voltage between the electrode and the workpiece to be surface-reduced is 1 to 25 V, a current density between the electrode and the workpiece to be surface-reduced is 0.1 to 2.5 A/cm², and a flow velocity of an electrolyte solution between the electrode and the workpiece to be surface-reduced is 1.0 to 3.0 m/sec.

### [Aspect 12]

A manufacturing method of a nickel-based alloy, the manufacturing method comprising a step of surface-reducing a workpiece to be surface-reduced made of a nickel-based alloy by using a device comprising a rotation surface-reducing head having an electrode and a grindstone,
wherein the step is a step of surface-reducing the workpiece to be surface-reduced by using the rotation surface-reducing head under conditions where an electrolytic voltage between the electrode and the workpiece to be surface-reduced is 25 to 40 V, a current density between the electrode and the workpiece to be surface-reduced is 1.0 to 15.0 A/cm², and a flow velocity of an electrolyte solution between the electrode and the workpiece to be surface-reduced is 1.0 to 4.0 m/sec.

### Advantageous Effects of Invention

One embodiment of the present invention can effectively surface-reduce a workpiece to be surface-reduced made of pure titanium or a titanium alloy or of a nickel-based alloy, which is a material other than stainless steel. Further, one embodiment of the present invention can reduce the amount of the electrolyte solution to flow and the amount of current (amount of power) compared to the conventional art. Further, since one embodiment of the present invention can surface-reduce a workpiece to be surface-reduced made of pure titanium or a titanium alloy or of a nickel-based alloy with oxide scale left adhered thereto which is generated during hot rolling or atmospheric annealing, the workpiece to be surface-reduced is not required to be washed with nitric hydrofluoric acid or the like before the surface-reducing step, and thus the environmental load due to drainage such as nitric hydrofluoric acid can be reduced.

### Brief Description of Drawings

[Fig. 1] Fig. 1 is a general perspective view of a rotation surface-reducing head 10.
[Fig. 2] Fig. 2 is a general bottom view of the rotation surface-reducing head 10.
[Fig. 3] Fig. 3 is a sectional view taken along the line A-A of Fig. 2.
[Fig. 4] Fig. 4 is a general diagram of an electrolytic surface-reducing device.
[Fig. 5] Fig. 5 is a general diagram illustrating a flow of an electrolyte solution in a surface-reducing step.

### Description of Embodiments

A method of surface-reducing a workpiece to be surface-reduced made of pure titanium or a titanium alloy or of a nickel-based alloy according to one embodiment of the present invention will be described. The workpiece to be surface-reduced that is a target of surface reduction in the method according to the present embodiment is intended for pure titanium or a titanium alloy or for a nickel-based alloy. The shape of the workpiece to be surface-reduced may be any shape such as a planar hot-rolled plate or cold-rolled plate, H-shaped steel, a column, a square pipe, a flat bar, or the like.

The pure titanium is titanium that satisfies any of JIS Class 1 to 4 standards. For example, the pure titanium contains 0.50 wt.% or less of an Fe component and 0.40 wt.% or less of an O component in addition to the Ti component as main components.

The titanium alloy is an alloy that has a component other than titanium, such as a metal that falls outside the range of components defined for pure titanium, and is made up of titanium and one or more other metals. The titanium alloy may be an α-type alloy, a β-type alloy, an α+β-type alloy, or a combination thereof. Other metals contained in a titanium alloy may be, but is not limited to, Al, V, Cr, Mo, Zr, Sn, Fe, Pd, or the like. For example, the titanium alloy contains 3.5 to 4.5 wt.% of an Al component, 15.0 to 17.0 wt.% of a V component, and 5.0 to 7.0 wt.% of a Cr component in addition to the Ti component as main components. An example of the titanium alloy may be, but is not limited to, DAT (registered trademark) series (DAT55G or the like) produced by Daido Steel Co., Ltd. or the like.

The nickel-based alloy is an alloy that contains nickel components the most and is made up of nickel and one or more other metals or the like. Other metals contained in the nickel-based alloy may be, but are not limited to, Cr, Cu, Mo, Fe, Mn, or the like. For example, the nickel-based alloy contains 14.0 to 24.0 wt.% of a Cr component, 10.0 wt.% or less of a Mo component, and 34 wt.% or less of a Cu component in addition to the Ni component as main components. An example of the nickel-based alloy may be, but is not limited to, NCF600, NCF625, NCF718, NW6002, or NW4400 of the JIS standard, NAS (registered trademark) series (NAS355N or the like) produced by Nippon Yakin Kogyo Co., Ltd., or the like.

For reference, respective components contained in the examples of pure titanium, titanium alloys, and nickel-based alloys described above are listed in Table 1 (the unit of numerical values in the table is wt.%).

**[Table 1]**

| **(1) Component of pure titanium** | | | | | | |
|---|---|---|---|---|---|---|
| Material | C | H | O | N | Fe | Ti |
| JIS Class 1 | ≦0.08 | ≦0.013 | ≦0.15 | ≦0.03 | ≦0.20 | Remainder |
| JIS Class 2 | ≦0.08 | ≦0.013 | ≦0.20 | ≦0.03 | ≦0.25 | Remainder |
| JIS Class 3 | ≦0.08 | ≦0.013 | ≦0.30 | ≦0.05 | ≦0.30 | Remainder |
| JIS Class 4 | ≦0.08 | ≦0.013 | ≦0.40 | ≦0.05 | ≦0.50 | Remainder |

### (2) Component of titanium alloy

| Material | C | H | O | N | Fe | Al | V | Cr | Ti |
|---|---|---|---|---|---|---|---|---|---|
| DAT55G by Daido Steel Co., Ltd. | ≦0.10 | ≦0.015 | ≦0.25 | ≦0.05 | ≦1.00 | 3.5 to 4.5 | 15.0 to 17.0 | 5.0 to 7.0 | Remainder |

### (3) Component of nickel-based alloy

| Material | C | Si | Mn | P | S | Ni | Cr | Mo | Cu | Others |
|---|---|---|---|---|---|---|---|---|---|---|
| Alloy 600 JIS NCF600 | ≦0.15 | ≦0.50 | ≦1.00 | ≦0.030 | ≦0.015 | ≧72.0 | 14.00 to 17.00 | - | ≦0.50 | Fe: 6.00 ~10.00 |
| Alloy 625 JIS NCF625 | ≦0.10 | ≦0.50 | ≦0.50 | ≦0.015 | ≦0.015 | ≧58.0 | 20.00 to 23.00 | 8.00 to 10.00 | - | Nb+Ta: 3.15 to 4.15 |
| Alloy 718 JIS NCF718 | ≦0.08 | ≦0.35 | ≦0.35 | ≦0.015 | ≦0.015 | 50.0 to 55.0 | 17.00 to 21.00 | 2.80 to 3.30 | - | Fe: Remainder |
| Alloy X (HASTELLOY X) JIS NW6002 | 0.05 to 0.15 | ≦1.00 | ≦1.00 | ≦0.040 | ≦0.030 | Remainder | 20.50 to 23.00 | 8.00 to 10.00 | - | Fe : 17.0 to 20.0 |
| NAS355N by Nippon Yakin Kogyo Co.. Ltd. | ≦0.03 | ≦1.00 | ≦1.00 | ≦0.020 | ≦0.005 | 35.0 to 36.0 | 22.00 to 24.00 | 7.00 to 8.00 | 3.00 to 4.00 | N:0.19 to 0.24 |
| Monel 400 JIS NW4400 | ≦0.30 | ≦0.50 | ≦2.00 | - | ≦0.025 | ≧63.0 | - | - | 28.0 to 34.0 | Fe: ≦2.5 |

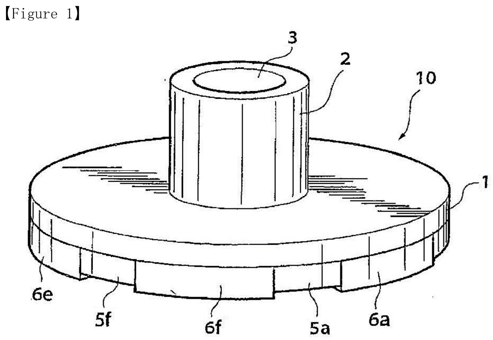

Next, a rotation surface-reducing head 10 used in the method of surface-reducing a workpiece to be surface-reduced made of pure titanium or a titanium alloy or of a nickel-based alloy according to the present embodiment will be described (Fig. 1 to Fig. 5).

Fig. 1 is a general perspective view of the rotation surface-reducing head 10. As illustrated in Fig. 1, the rotation surface-reducing head 10 includes a head base 1, a rotation shaft 2, and electrodes 5 (5a to 5f) and grindstones 6 (6a to 6f) provided to the base 1. The rotation shaft 2 has hollow structure and includes a pipe part 3 for an electrolyte solution to flow therethrough. The head base 1 and the rotation shaft 2 may be integrally molded or may be separate members joined to each other. While the materials of the head base 1 and the rotation shaft 2 of the rotation surface-reducing head 10 are not particularly limited, materials with excellent corrosion resistance, such as stainless steel, titanium, a titanium alloy, or the like, for example, can be used.

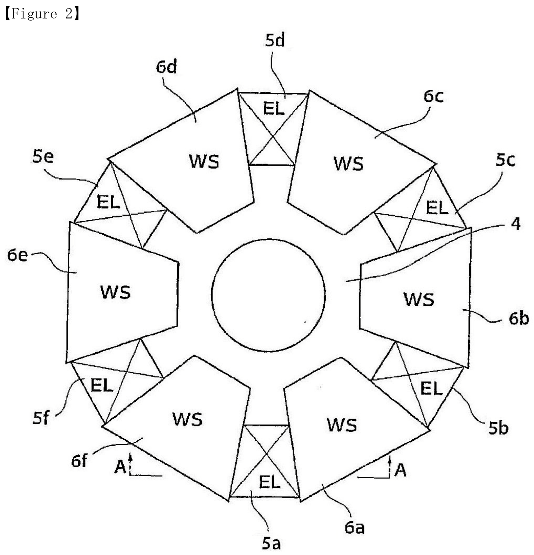

Fig. 2 is a general bottom view of the rotation surface-reducing head 10. As illustrated in Fig. 2, the bottom face of the rotation surface-reducing head 10 has the electrodes 5 (EL) and the grindstones 6 (WS) arranged in order along the circumference of the circular head base 1, and a recessed liquid storage part 4 is provided in the center part thereof. The liquid storage part 4 communicates with the pipe part 3 so that an electrolyte solution that has flown into the pipe part 3 flows to the liquid storage part 4. Typically, sets of the electrode 5 and the grindstone 6 are arranged alternatingly and arranged so as to cover the circumferential portion of the head base 1. The number of sets of the electrode 5 and the grindstone 6 is not limited to 6 as illustrated, and any number (for example, 2 to 20 sets) may be applied.

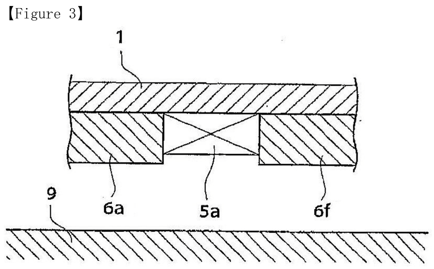

Fig. 3 is a sectional view taken along the line A-A of Fig. 2 and illustrates the positional relationship between the set of the electrode 5 and the grindstone 6 and a workpiece to be surface-reduced 9 facing the rotation surface-reducing head 10. Note that the illustrated arrangement represents a state where the surface-reducing step is not being performed.

As illustrated in Fig. 3, the electrode 5, the grindstone 6, and the workpiece to be surface-reduced 9 are arranged such that the bottom side of each grindstone 6 (6a, 6f in Fig. 3) (the face facing the workpiece to be surface-reduced 9) is close to the workpiece to be surface-reduced 9 and the bottom side of each electrode (5a in Fig. 3) does not come into contact with the workpiece to be surface-reduced 9.

The electrodes 5 (5a to 5f) are arranged to be at the same height, respectively, in order to maintain a constant current density during electric conduction. Further, the grindstones 6 (6a to 6f) are arranged to be at the same height, respectively, in order to have constant accuracy of surface reduction. Note that the height of the grindstones 6 is greater than the height of the electrodes 5.

As illustrated in Fig. 3, because the grindstones 6 (6a, 6f in Fig. 3) is arranged higher (thicker) than the electrodes 5 (5a in Fig. 3), it is possible for the electrodes 5 to maintain a predetermined distance to the workpiece to be surface-reduced 9 even in a state where the grindstones 6 are in contact with the workpiece to be surface-reduced 9. Accordingly, it is possible to prevent spark between the electrode and the workpiece to be surface-reduced 9 that would otherwise occur while performing the surface-reducing step and to ensure a channel (space) for the electrolyte solution to flow between the electrodes 5 and the workpiece to be surface-reduced 9.

For the electrode 5, an electrode made of pure copper is used in order to reduce electrical resistance as much as possible. For the grindstone 6, a commercially available typical grindstone (an elastic grindstone or the like) is used. For example, the elastic grindstone may be produced by mixing abrasive grains of alumina, silicon carbide, zirconia, or the like with a binding material such as heat-resistant epoxy resin, Bakelite, or nylon nonwoven fabric and compressing and molding the mixture. The elastic grindstone is elastically deformable while having the function of a grindstone. The grit size of the grindstone 6 may be any of, for example, #80 to #400, #80 to #300, #80 to #250, #100 to #500, #100 to #300, #100 to #250, #150 to #500, #150 to #300, #150 to #250, #150 to #240, or #150 or #240. Note that the denotation of the grit size "# numerical value" represents the number of abrasive grains included in 1 cm² of a grindstone face. For example, a grindstone grit size "#150" means that the number of abrasive grains included in 1 cm² of a grindstone face is 150.

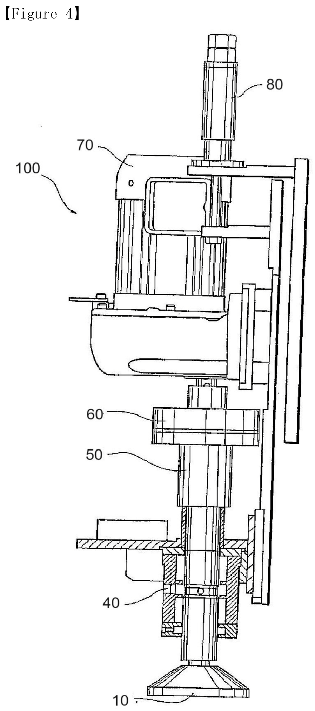

Fig. 4 is a general diagram of an electrolytic surface-reducing device 100 including the rotation surface-reducing head 10 used for the method of surface-reducing a workpiece to be surface-reduced made of pure titanium or a titanium alloy or of a nickel-based alloy. The electrolytic surface-reducing device 100 includes the rotation surface-reducing head 10, an electrolyte solution supply part 40, a conduction part 50, an insulating coupling 60, a head rotary motor 70, a lifting device 80, and the like.

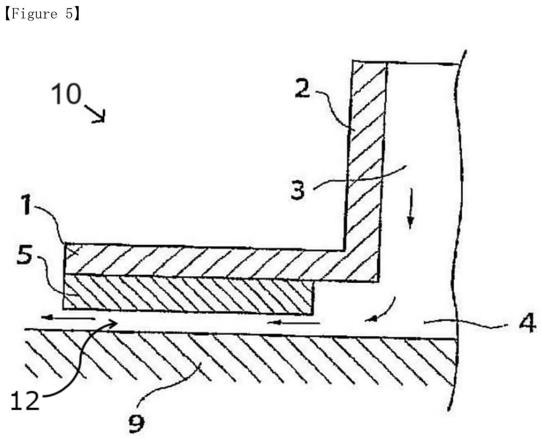

The electrolyte solution supply part 40 includes a flow rate adjusting pump and, manually or in response to a control signal from a control computer (not illustrated) of the electrolytic surface-reducing device 100, applies a predetermined pressure to an electrolyte solution to supply the electrolyte solution to the rotation surface-reducing head 10. As illustrated in Fig. 5, the electrolyte solution supply part 40 supplies an electrolyte solution to the liquid storage part 4 through the pipe part 3 of the rotation shaft 2 of the rotation surface-reducing head 10 to supply the electrolyte solution to a space 12 between the workpiece to be surface-reduced 9 and the electrode 5. The pressure applied to the electrolyte solution by the electrolyte solution supply part 40 and the rotational rate of the rotation surface-reducing head 10 are adjusted, and thereby the electrolyte solution is supplied to be at a predetermined flow velocity (m/sec) when flowing through the space 12 between the workpiece to be surface-reduced 9 and the electrode 5 of Fig. 5. As the electrolyte solution, a sodium nitrate aqueous solution, a sodium sulfate aqueous solution, or the like can be used. The predetermined flow velocity of the electrolyte solution may be in a range of 0.1 to 5.0 m/sec, 1.0 to 4.0 m/sec, 1.0 to 3.0 m/sec, 1.8 to 2.2 m/sec, 1.9 to 2.1 m/sec, 2.2 to 2.8 m/sec, 2.2 to 3.0 m/sec, 2.2 to 2.9 m/sec, 2.3 to 2.9 m/sec, 2.3 to 2.7 m/sec, 2.4 to 2.67 m/sec, 2.4 to 2.9 m/sec, or 2.6 to 2.9 m/sec, or any value included in the range.

The conduction part 50 includes a voltage adjustor or a current adjustor connected to a power supply (not illustrated) and, manually or in response to a control signal from the control computer (not illustrated) of the electrolytic surface-reducing device 100, generates a potential difference between the electrode 5 of the rotation surface-reducing head 10 and the workpiece to be surface-reduced 9 to apply a predetermined electrolytic voltage to the electrolyte solution flowing through the space 12 between the electrode 5 and the workpiece to be surface-reduced 9 and cause current at a predetermined current density to flow.

The predetermined electrolytic voltage to be applied to the electrolyte solution may be, for example, in a range of 1 to 40 V, 1 to 30 V, 1 to 25 V, 1 to 20 V, 1 to 15 V, 5 to 25 V, 5 to 20 V, 5 to 15 V, 6 to 15 V, 8 to 25 V, 8 to 20 V, 8 to 15 V, 10 to 20 V, 12 to 20 V, 10 to 15 V, 12 to 19 V, 25 to 40 V, 25 to 35 V, 28 to 35 V, 28 to 34 V, 30 to 35 V, 31 to 35 V, 32 to 35 V, or 32 to 34 V, or any value included in the range. The value of the electrolytic voltage is selected in accordance with a type of the workpiece to be surface-reduced (pure titanium, a titanium alloy, or a nickel-based alloy).

The predetermined current density of current flowing through the electrolyte solution may be, for example, in a range of 0.1 to 15.0 A/cm², 0.1 to 10.0 A/cm², 0.1 to 5.0 A/cm², 0.1 to 2.5 A/cm², 0.1 to 2.0 A/cm², 0.1 to 1.7 A/cm², 0.1 to 1.3 A/cm², 0.2 to 2.5 A/cm², 0.2 to 2.0 A/cm², 0.3 to 2.5 A/cm², 0.3 to 2.0 A/cm², 0.3 to 1.7 A/cm², 0.31 to 1.65 A/cm², 0.9 to 1.3 A/cm², 0.93 to 1.24 A/cm², 0.9 to 2.5 A/cm², 0.9 to 2.0 A/cm², 0.9 to 1.7 A/cm², 0.9 to 1.3 A/cm², 1.0 to 15.0 A/cm², 1.0 to 11.0 A/cm², 1.03 to 1.65 A/cm², 3.0 to 15.0 A/cm², 3.0 to 11.0 A/cm², 4.0 to 11.0 A/cm², 5.0 to 15.0 A/cm², 5.0 to 11.0 A/cm², 5.3 to 11.0 A/cm², 5.5 to 11.0 A/cm², 5.5 to 10.7 A/cm², 7.0 to 10.7 A/cm², or 9.0 to 10.7 A/cm², or any value included in the range. The value of the current density is selected in accordance with a type of the workpiece to be surface-reduced (pure titanium, a titanium alloy, or a nickel-based alloy).

The insulating coupling 60 is an arrangement for preventing current leakage, and the head rotary motor 70 and the rotation surface-reducing head 10 are coupled directly or indirectly to each other so that the rotational force of the head rotary motor 70 is transferred to the rotation surface-reducing head 10. The head rotary motor 70 rotates the rotation surface-reducing head 10 at a predetermined rotational rate. The rotational rate of the rotation surface-reducing head 10 may be, for example, in a range of 100 to 1000 rpm, 100 to 700 rpm, 100 to 500 rpm, 300 to 1000 rpm, 300 to 700 rpm, 300 to 500 rpm, or 300 to 400 rpm, or any value included in the range.

The workpiece to be surface-reduced 9 is placed below the rotation surface-reducing head 10 so as to face the same, and the lifting device 80 presses the rotation surface-reducing head 10 in rotation against the workpiece to be surface-reduced 9 at a predetermined pressure manually or in response to a control signal from the control computer (not illustrated) of the electrolytic surface-reducing device 100. The pressure applied to the rotation surface-reducing head 10 may be, for example, in a range of 0.1 to 10.0 kN, 0.1 to 5.0 kN, 0.1 to 3.0 kN, 0.5 to 10.0 kN, 0.5 to 5.0 kN,0.5 to 3.0 kN, 1.0 to 10.0 kN, 1.0 to 5.0 kN, 1.0 to 3.0 kN, 1.0 to 2.5 kN,2.0 to 5.0 kN, 2.0 to 3.0 kN, 2.0 to 2.5 kN, 2.0 to 2.3 kN, or 2.07 to 2.21 kN, or any value included in the range.

In detail, it is preferable that the electrolytic voltage, the current density, and the electrolyte solution flow velocity described above in the step of surface-reducing the workpiece to be surface-reduced be set to the following range or any value included in the range, respectively, in accordance with the material of the workpiece to be surface-reduced 9.
(1) When the workpiece to be surface-reduced 9 is made of pure titanium
   Electrolytic voltage: 8 to 20 V, 10 to 20 V, 12 to 20 V, or 12 to 19 V
   Current density: 0.1 to 2.0 A/cm², 0.2 to 2.0 A/cm², 0.3 to 2.0 A/cm², 0.3 to 1.7 A/cm², 0.31 to 1.65 A/cm², or 1.03 to 1.65 A/cm²
   Flow velocity of electrolyte solution: 2.2 to 2.8 m/sec, 2.3 to 2.7 m/sec, or 2.4 to 2.67 m/sec
(2) When the workpiece to be surface-reduced 9 is made of a titanium alloy
   Electrolytic voltage: 5 to 15 V, 6 to 15 V, 8 to 15 V, or 10 to 15 V
   Current density: 0.9 to 1.3 A/cm² or 0.93 to 1.24 A/cm²
   Flow velocity of electrolyte solution: 1.8 to 2.2 m/sec or 1.9 to 2.1 m/sec
(3) When the workpiece to be surface-reduced 9 is made of a nickel-based alloy
   Electrolytic voltage: 28 to 35 V, 30 to 35 V, 32 to 35 V, or 32 to 34 V
   Current density: 4.0 to 11.0 A/cm², 5.0 to 11.0 A/cm², 5.3 to 11.0 A/cm², 5.5 to 11 A/cm², 5.5 to 10.7 A/cm², 7.0 to 10.7 A/cm², or 9.0 to 10.7 A/cm²
   Flow velocity of electrolyte solution: 2.2 to 3.0 m/sec, 2.2 to 2.9 m/sec, 2.3 to 2.9 m/sec, 2.4 to 2.9 m/sec, or 2.6 to 2.9 m/sec

An electrolytic surface-reducing method of the workpiece to be surface-reduced 9 by using the electrolytic surface-reducing device 100 having the rotation surface-reducing head 10 will be described. In the step of surface-reducing the workpiece to be surface-reduced 9, the rotation surface-reducing head 10 in rotation is lowered by the lifting device 80 to come into contact with the workpiece to be surface-reduced 9 at a predetermined pressure, and thereby surface reduction of the workpiece to be surface-reduced 9 is performed.

Fig. 5 is a part of a sectional view taken along a cut surface formed of the central axis (axis of rotation) and a plane including the electrode 5 of the rotation surface-reducing head 10, and arrows in Fig. 5 represent a view of the electrolyte solution flowing therethrough. The electrolyte solution supplied from the electrolyte solution supply part 40 of the electrolytic surface-reducing device 100 to which the rotation surface-reducing head 10 is attached passes through the pipe part 3 in the rotation shaft 2 and is supplied to the liquid storage part 4. The electrolyte solution supplied to the liquid storage part 4 flows through the gap (the space 12) between the electrode 5 and the workpiece to be surface-reduced 9 at the above predetermined flow velocity determined by the pressure applied by the electrolyte solution supply part 40 and the centrifugal force provided by rotation of the rotation surface-reducing head 10.

A negative potential (or a positive potential) is applied to the electrode 5 by the conduction part 50, a positive potential (or a negative potential) is applied to the workpiece to be surface-reduced 9, and setting is made so that the electrolytic voltage and the current density of the electrolyte solution between the electrode 5 and the workpiece to be surface-reduced 9 are within a predetermined range described above. Due to the current flowing through the electrolyte solution, hydrogen is generated from the surface of the electrode 5, and an electrolytic eluate is generated from the surface of the workpiece to be surface-reduced 9, all of which are discharged together with the electrolyte solution.

Since the grindstone 6 is not significantly deformed by a pressure, a predetermined distance (the space 12) between the electrode 5 and the workpiece to be surface-reduced 9 can be maintained even when a pressure is applied to the workpiece to be surface-reduced 9 by the lifting device 80 in the surface-reducing step. Accordingly, a spark is prevented that would otherwise be caused by contact between the workpiece to be surface-reduced 9 and the electrode 5 during electrolytic surface reduction, and a channel for the electrolyte solution is ensured.

### EXAMPLES

Examples and comparative examples related to the method of surface-reducing a workpiece to be surface-reduced of the present invention using an electrolytic surface-reducing device will be described.

In each example and comparative example, the same conditions were applied except for the conditions of the surface-reducing step listed in Tables 2 to 4. That is, in all the examples, the same electrolytic surface-reducing device was used, the feed rate of the workpiece to be surface-reduced was constant at 0.6 m/min, and the surface-reducing step was performed with the same electrolyte solution (sodium nitrate aqueous solution). Note that, while the feed width of motion of the rotation surface-reducing head on the workpiece to be surface-reduced was 160 mm or the like, this parameter does not affect the surface-reducing ability (surface reduction result).

The rotation surface-reducing head of the electrolytic surface-reducing device having six sets of the electrode and the grindstone was used. Each electrode of the rotation surface-reducing head is made of pure copper, and each grindstone is an elastic grindstone (which is of a grindstone grit size of #150 or #240, the grain size is coarser in #150 than in #240, and abrasive grains are made of alumina).

The workpieces to be surface-reduced were hot-rolled plates made of pure titanium in Examples 1 to 4 and Comparative examples 1 to 3, hot-rolled plates made of a titanium alloy in Example 5 and Comparative examples 4 and 5, and hot-rolled plates made of a nickel-based alloy in Examples 6 to 11.

In Tables 2 to 4, the grindstone grit size is a grit size of a grindstone attached to the rotation surface-reducing head, and the pressurizing force (kN) is a pressure to be applied to the rotation surface-reducing head. The current density (A/cm²) and the electrolytic voltage (V) are a current density of current flowing through and a voltage applied to the electrolyte solution flowing in the space between the electrode and the workpiece to be surface-reduced, respectively. The rotational rate (rpm) is the number of rotations of the rotation surface-reducing head per one minute, and the electrolyte solution flow velocity (m/s) is a flow velocity at which the electrolyte solution flows through the space between the electrode and the workpiece to be surface-reduced.

**[Table 2]**

| Table 2: Conditions for surface-reducing step on pure titanium | | | | | | | |
|---|---|---|---|---|---|---|---|
| | Workpiece to be surface-reduced | Grindstone girt size | Pressurizing force (kN) | Current density (A/cm²) | Electrolytic voltage (V) | Rotational rate (rpm) | Electrolyte solution flow velocity (m/s) |
| Inventive Example 1 | Pure titanium JIS Class 1 | #150 | 2.07 | 0.31 to 1.24 | 8 to 20 (15V is optimal) | 400 | 2.40 |
| Inventive Example 2 | Pure titanium JIS Class 2 | #240 | 1.91 | 1.03 to 1.55 | 15 | 347 | 2.67 |
| Inventive Example 3 | Pure titanium JIS Class 3 | #150 | 2.07 to 2.21 | 1.03 to 1.65 | 12 to 19 (15V is optimal) | 347 | 2.40 |
| Inventive Example 4 | Pure titanium JIS Class 4 | #240 | 2.07 to 2.21 | 1.03 to 1.65 | 12 to 19 (15V is optimal) | 347 | 2.40 |
| Comparative Example 1 | Pure titanium JIS Class 1 | #240 | 1.96 to 2.11 | 8.26 to 12.38 | 25 | 400 | 1.96 |
| Comparative Example 2 | Pure titanium JIS Class 2 | #150 | 1.91 | 2.58 to 2.68 | 20 | 400 | 2.14 |
| Comparative Example 3 | Pure titanium ST40 (by Sumitomo Metal Industries, Ltd.) | #240 | 2.07 to 2.23 | 0.10 to 0.60 | 10 to 20 | 400 | 0.42 |

**[Table 3]**

| Table 3: Conditions for surface-reducing step on titanium alloy | | | | | | | |
|---|---|---|---|---|---|---|---|
| | Material | Grindstone girt size | Pressurizing force (kN) | Current density (A/cm²) | Electrolytic voltage (V) | Rotational rate (rpm) | Electrolyte solution flow velocity (m/s) |
| Inventive Example 5 | DAT55G (by Daido Steel Co., Ltd.) | #150 | 1.68 | 0.93 to 1.24 | 5 to 15 (10 to 15V is optimal) | 350 | 2.00 |
| Comparative Example 4 | SP700 (by JFE Steel Corporation) | #240 | 2.11 | 12.38 | 25 | 400 | 1.92 |
| Comparative Example 5 | SP700 (by JFE Steel Corporation) | #240 | 1.92 | 3.41 | 5 to 15 | 400 | 2.14 |

**[Table 4]**

| Table 4: Conditions for surface-reducing step on nickel-based alloy | | | | | | | |
|---|---|---|---|---|---|---|---|
| | Material | Grindstone girt size | Pressurizing force (kN) | Current density (A/cm²) | Electrolytic voltage (V) | Rotational rate (rpm) | Electrolyte solution flow velocity (m/s) |
| Inventive Example 6 | Alloy 600 JIS NCF600 | #150 | 1.91 | 5.67 to 9.29 | 33 | 400 | 2.67 |
| Inventive Example 7 | Alloy 625 JIS NCF625 | #150 | 1.81 | 7.53 to 9.80 | 33 | 347 | 2.40 |
| Inventive Example 8 | Alloy 718 JIS NCF718 | #150 | 1.45 | 4.13 | 28 | 320 | 2.85 |
| Inventive Example 9 | Alloy X (HASTELLOY X) JIS NW6002 | #150 | 1.68 | 7.22 to 10.63 | 34 | 320 | 2.67 |
| Inventive Example 10 | NAS355N (by Nippon Yakin Kogyo Co., Ltd.) | #150 | 2.16 | 9.29 to 9.80 | 32 | 350 | 2.85 |
| Inventive Example 11 | Monel 400 JIS NW4400 | #150 | 1.97 | 9.18 to 10.11 | 33 | 320 | 2.40 |

In all the Examples and Comparative examples, results of surface-reducing processing on the workpiece to be surface-reduced by one-pass were evaluated. Note that "one-pass" refers to performing surface-reducing processing by causing a workpiece to be surface-reduced to pass through once while pressing the rotation surface-reducing head in rotation against the workpiece to be surface-reduced and moving the workpiece to be surface-reduced in one direction at a constant feed rate (0.6 m/min).

For all the workpieces to be surface-reduced after the surface-reducing step in Examples 1 to 4, Example 5, and Examples 6 to 11, no acid-pickled surface (mill scale), which was recognized by visual inspection before the surface-reducing step, was observed on the surface after the surface-reducing step, and metallic luster appeared. That is, the surface-reduced workpiece (pure titanium, a titanium alloy, or a nickel-based alloy) having a metallic lustered surface was obtained. Further, for the amount of surface reduction (the amount of reduction in the thickness of the surface-reduced workpiece) per one-pass, all the surface-reduced workpieces after the surface-reducing step of Examples 1 to 4, Example 5, and Examples 6 to 11 were surface-reduced by 20 µm or more, and therefore a sufficient surface reduction effect was obtained.

In contrast, for all the surface-reduced workpieces after the surface-reducing step of Comparative examples 1 to 5, mill scale remained at least partially in visual inspection. Further, for all the surface-reduced workpieces after the surface-reducing step of Comparative examples 1 to 5, the amount of surface reduction (the amount of reduction in the thickness of the surface-reduced workpiece) per one-pass was less than 10 µm, and therefore a sufficient surface reduction effect was not obtained.

Note that, even under the conditions of the comparative examples, it is not impossible to obtain a predetermined amount of surface reduction (20 µm or more) and eliminate the mill scale observed in visual inspection by performing the surface-reducing step for multiple times (multiple passes) on the workpiece to be surface-reduced. However, the Examples that can achieve both obtaining a predetermined amount of surface reduction (20 µm or more) and eliminating the mill scale observed in visual inspection with one pass of surface-reducing step can realize more effective surface reduction.

The dimensions, materials, shapes, relative positions of components, or the like described in the above embodiment may be any dimensions, materials, shapes, relative positions of components, or the like and may be changed in accordance with the structure of the device or various conditions to which the present invention is applied. Further, the present invention is not limited to the embodiment specifically described above.

Note that the present invention further includes the following aspects.
[1] A method of surface-reducing a workpiece to be surface-reduced by using a device comprising a rotation surface-reducing head and an electrolyte solution supply part, the rotation surface-reducing head having an electrode made of pure copper and a grindstone, the electrolyte solution supply part being configured to supply an electrolyte solution to a space between the electrode and the workpiece to be surface-reduced made of pure titanium, the method comprising a step of:
   surface-reducing the workpiece to be surface-reduced by using the rotation surface-reducing head under conditions where an electrolytic voltage between the electrode and the workpiece to be surface-reduced is 8 to 20 V, a current density of current flowing through the electrolyte solution flowing through the space is 0.3 to 1.7 A/cm², and a flow velocity of the electrolyte solution flowing through the space is 2.2 to 2.8 m/sec.
[2] The method according to [1],
   wherein the step of surface-reducing is performed under additional conditions where:
   a rotational rate of the rotation surface-reducing head is 300 to 400 rpm,
   a pressurizing force applied to the rotation surface-reducing head is 2.0 to 2.5 kN, 2.0 to 2.3 kN, or 2.07 to 2.21 kN, and
   a grit size of the grindstone is #100 to #250, #150 to #250, or #150 to #240.
[3] The method according to [1] or [2], wherein the pure titanium contains 0.50 wt.% of less of an Fe component and 0.40 wt.% or less of an O component in addition to the Ti component.
[4] The manufacturing method of pure titanium comprising a step of:
   surface-reducing a workpiece to be surface-reduced by using a device comprising a rotation surface-reducing head and an electrolyte solution supply part, the rotation surface-reducing head having an electrode made of pure copper and a grindstone, the electrolyte solution supply part being configured to supply an electrolyte solution to a space between the electrode and the workpiece to be surface-reduced made of pure titanium,
   wherein the step is a step of surface-reducing the workpiece to be surface-reduced by using the rotation surface-reducing head under conditions where an electrolytic voltage between the electrode and the workpiece to be surface-reduced is 8 to 20 V, a current density of current flowing through the electrolyte solution flowing through the space is 0.3 to 1.7 A/cm², and a flow velocity of the electrolyte solution flowing through the space is 2.2 to 2.8 m/sec.

### List of Reference Symbols

- 1: head base
- 2: rotation shaft
- 3: pipe part
- 4: liquid storage part
- 5: electrode
- 6: grindstone
- 9: workpiece to be surface-reduced
- 10: rotation surface-reducing head
- 40: electrolyte solution supply part
- 50: conduction part
- 60: insulating coupling
- 70: head rotary motor
- 80: lifting device
- 100: electrolytic surface-reducing device

## Claims

1. A method of surface-reducing a workpiece to be surface-reduced made of pure titanium or a titanium alloy by using a device comprising a rotation surface-reducing head having an electrode and a grindstone, the method comprising a step of:
surface-reducing the workpiece to be surface-reduced by using the rotation surface-reducing head under conditions where an electrolytic voltage between the electrode and the workpiece to be surface-reduced is 1 to 25 V, a current density between the electrode and the workpiece to be surface-reduced is 0.1 to 2.5 A/cm², and a flow velocity of an electrolyte solution between the electrode and the workpiece to be surface-reduced is 1.0 to 3.0 m/sec.

2. The method according to claim 1,
wherein the workpiece to be surface-reduced is made of pure titanium, and
wherein the electrolytic voltage is 8 to 20 V, the current density is 0.3 to 1.7 A/cm², and the flow velocity of the electrolyte solution is 2.2 to 2.8 m/sec.

3. The method according to claim 2, wherein the pure titanium contains 0.50 wt.% or less of an Fe component and 0.40 wt.% or less of an O component in addition to the Ti component.

4. The method according to claim 1,
wherein the workpiece to be surface-reduced is made of a titanium alloy, and
wherein the electrolytic voltage is 5 to 15 V, the current density is 0.9 to 1.3 A/cm², and the flow velocity of the electrolyte solution is 1.8 to 2.2 m/sec.

5. The method according to claim 4, wherein the titanium alloy contains 3.5 to 4.5 wt.% of an Al component, 15.0 to 17.0 wt.% of a V component, and 5.0 to 7.0 wt.% of a Cr component in addition to the Ti component.

6. A method of surface-reducing a workpiece to be surface-reduced made of a nickel-based alloy by using a device comprising a rotation surface-reducing head having an electrode and a grindstone, the method comprising a step of:
surface-reducing the workpiece to be surface-reduced by using the rotation surface-reducing head under conditions where an electrolytic voltage between the electrode and the workpiece to be surface-reduced is 25 to 40 V, a current density between the electrode and the workpiece to be surface-reduced is 1.0 to 15.0 A/cm², and a flow velocity of an electrolyte solution between the electrode and the workpiece to be surface-reduced is 1.0 to 4.0 m/sec.

7. The method according to claim 6, wherein the electrolytic voltage is 28 to 35 V, the current density is 4.0 to 11.0 A/cm², and the flow velocity of the electrolyte solution is 2.2 to 3.0 m/sec.

8. The method according to claim 6, wherein the nickel-based alloy contains 14.0 to 24.0 wt.% of a Cr component, 10.0 wt.% or less of a Mo component, and 34 wt.% or less of a Cu component in addition to the Ni component.

9. The method according to any one of claims 1 to 8, wherein the step is performed under further conditions where a pressure applied to the rotation surface-reducing head is 1.0 to 3.0 kN and a rotational rate of the rotation surface-reducing head is 300 to 500 rpm.

10. The method according to any one of claims 1 to 8, wherein the electrode is made of pure copper.

11. A manufacturing method of pure titanium or a titanium alloy, the manufacturing method comprising a step of surface-reducing a workpiece to be surface-reduced made of pure titanium or a titanium alloy by using a device comprising a rotation surface-reducing head having an electrode and a grindstone,
wherein the step is a step of surface-reducing the workpiece to be surface-reduced by using the rotation surface-reducing head under conditions where an electrolytic voltage between the electrode and the workpiece to be surface-reduced is 1 to 25 V, a current density between the electrode and the workpiece to be surface-reduced is 0.1 to 2.5 A/cm², and a flow velocity of an electrolyte solution between the electrode and the workpiece to be surface-reduced is 1.0 to 3.0 m/sec.

12. A manufacturing method of a nickel-based alloy, the manufacturing method comprising a step of surface-reducing a workpiece to be surface-reduced made of a nickel-based alloy by using a device comprising a rotation surface-reducing head having an electrode and a grindstone,
wherein the step is a step of surface-reducing the workpiece to be surface-reduced by using the rotation surface-reducing head under conditions where an electrolytic voltage between the electrode and the workpiece to be surface-reduced is 25 to 40 V, a current density between the electrode and the workpiece to be surface-reduced is 1.0 to 15.0 A/cm², and a flow velocity of an electrolyte solution between the electrode and the workpiece to be surface-reduced is 1.0 to 4.0 m/sec.
